# EUROPEAN PATENT APPLICATION

(11) **EP 2 416 572 A1**
(43) Date of publication of application: **08.02.2012**
(21) Application number: 10758024.3
(22) Date of filing: 25.03.2010
(51) Int. Cl.: H04N 7/24

(54) **METHOD AND APPARATUS FOR OBTAINING ADDRESS OF VIDEO TRANSMISSION MANAGEMENT SERVER**

(30) Priority: 31.03.2009 CN 200910106432
(71) Applicant: Huawei Technologies Co., Ltd., Guangdong 518129 (CN)
(72) Inventor: CAI, Youyuan, Shenzhen Guangdong 518129 (CN); XIANG, Haizhou, Shenzhen Guangdong 518129 (CN); ZHENG, Hewen, Shenzhen Guangdong 518129 (CN); QIU, Zhigang, Shenzhen Guangdong 518129 (CN)
(74) Representative: Barth, Stephan Manuel
(86) International application number: PCT/CN2010/071300
(87) International publication number: WO 2010/111922

(57) **Abstract**

A method, a system and an apparatus for obtaining an address of a video transmission management server are disclosed. The method includes: sending a request for obtaining location information of the video transmission management server to a host parameter configuration server, where the video transmission management server is an Automatic Repeat Request server (ARQ server), a Fast Channel Change server (FCC server) or a Forward Error Correction server (FEC server), or any combination thereof, and the host parameter configuration server is a Dynamic Host Configuration Protocol server (DHCP server) or a Point-to-Point Protocol server (PPP server); and receiving a response returned by the host parameter configuration server, and obtaining the location information of the video transmission management server. In this way, the following problems in the prior art are solved: a configuration server needs to be introduced additionally, the interaction procedure is complex, the configuration workload is heavy and the operation expenditure is high, the risk of potential node faults is high. Therefore, the interaction procedure is simplified and the user experience is improved.

## Description

This application claims priority to Chinese Patent Application No. 200910106432.X, filed with the Chinese Patent Office on March 31, 2009 and entitled "METHOD, SYSTEM AND APPARATUS FOR OBTAINING ADDRESS OF VIDEO TRANSMISSION MANAGEMENT SERVER", which is hereby incorporated by reference in its entirety.

### FIELD OF THE INVENTION

The present invention relates to network technologies in the communications field, and in particular, to a method and an apparatus for obtaining an address of a video transmission management server.

### BACKGROUND OF THE INVENTION

In an IPTV service, loss or error of packets, caused by noise of the access line or channel switching, deteriorates the visual experience of the user drastically, and a video transmission management server is generally required for enhancing user experience. The video transmission management server provides Automatic Repeat Request (ARQ) for lost and erroneous packets, Fast Channel Change (FCC) for fast pushing of key information, Forward Error Correction (FEC) on the application layer, and so on.

In order to reduce traffic between the user's Set Top Box (STB) and the video transmission management server, the video transmission management servers are generally integrated on a network device near the user. For example, the edge router, transmission devices in metropolitan area network, access device (such as OLT or DSLAM), and video transmission management server are integrated on the network device. With the video transmission management server being integrated on the network device, all downstream users of the network device share the same video transmission management server, the users attached different network devices use different video transmission management servers, and the STB of the user needs to know the address of the corresponding video transmission management server in order to communicate with the server.

The conventional technical solution of obtaining, by the user's Set Top Box STB, the address of the video transmission management server is: After startup, the STB obtains the suffix of the domain of the STB through a Dynamic Host Configuration Protocol server (DHCP server), and combines the suffix with the hard-coded prefix embedded in the STB software to form a domain name of a channel configuration server (such as EPG server); the STB obtains an IP address of the channel configuration server corresponding to the domain name through a DNS resolution mechanism; finally, the STB requests and obtains the address of the video transmission management server from the channel configuration server by using Real Time Streaming Protocol (RTSP).

In the process of implementing the present invention, the inventor finds at least the following problems in the prior art:
In the prior art, the IP address of the video transmission management server is obtained through the channel configuration server by interaction of RTSP protocol, which is complex in practice and depends on the channel configuration server for implementing the interaction procedure, and involves more nodes vulnerable to faults. Moreover, the channel configuration server knows only the channel information, but knows no user access location, which makes it difficult to deploy the corresponding video transmission management server according to the user access location and the dynamic address. Moreover, considering the huge number of IPTV users, the work of configuring the channel configuration server is an enormous task, and the operation expenditure is very high.

### SUMMARY OF THE INVENTION

The embodiments of the present invention provide a method, a system and an apparatus for obtaining the address of a video transmission management server so that the address of the video transmission management server is obtained automatically in the process of obtaining DHCP parameter, no configuration server needs to be introduced additionally, the interaction procedure is simplified, costs are low, and therefore the user experience is improved.

The embodiments of the present invention are based on the following technical solutions:
A method for obtaining an address of a video transmission management server includes:
   sending a request for obtaining location information of the video transmission management server to a host parameter configuration server; and receiving a response returned by the host parameter configuration server, and obtaining the location information of the video transmission management server; where the video transmission management server is an ARQ server, an FCC server or an FEC server, or any combination thereof, and the host parameter configuration server is a DHCP server or a Point-to-Point Protocol server (PPP server).
A system for obtaining an address of a video transmission management server includes:
   a user terminal, configured to send a request for obtaining location information of the video transmission management server to a host parameter configuration server; and receive a response returned by the host parameter configuration server, and obtain the location information of the video transmission management server, where the video transmission management server is an ARQ server, an FCC server or an FEC server, or any combination thereof; and
   a host parameter configuration server, configured to receive the request sent by the user terminal for obtaining the location information of the video transmission management server; obtaining the location information of the video transmission management server according to the request, and returning the response to the user terminal, where the host parameter configuration server is a DHCP server or a PPP server.
An apparatus for obtaining an address of a video transmission management server includes:
   a sending unit, configured to send a request for obtaining location information of the video transmission management server to a host parameter configuration server, where the video transmission management server is an ARQ server, an FCC server or an FEC server, or any combination thereof, and the host parameter configuration server is a DHCP server or a PPP server; and
   a receiving unit, configured to receive a response returned by the host parameter configuration server, and obtain the location information of the video transmission management server.

In the technical solutions described above, a request for obtaining the location information of the video transmission management server is sent to the host parameter configuration server; a response that carries the location information required by the user terminal is received from the host parameter configuration server, and the location information of the video transmission management server is obtained. In this way, the following problems in the prior art are solved: a configuration server needs to be introduced additionally, the interaction procedure is complex, the configuration workload is heavy and the operation expenditure is high, the risk of potential node faults is high. Therefore, the interaction procedure is simplified and the user experience is improved.

### BRIEF DESCRIPTION OF THE DRAWINGS

To make clearer the technical solutions under the present invention or in the prior art, the following describes the accompanying drawings involved in the description of the embodiments of the present invention or the prior art. Apparently, the accompanying drawings described below are only some embodiments of the present invention and persons skilled in the field can derive other drawings from such accompanying drawings without creative efforts.
FIG. 1 is a flowchart of a method for obtaining an address of a video transmission management server in an embodiment of the present invention;
FIG. 2 is a flowchart showing detailed implementation of a method for obtaining an address of a video transmission management server in an embodiment of the present invention;
FIG. 3 is a structural diagram showing how a DHCP option carries a domain name of a video transmission management server DNS in an embodiment of the present invention;
FIG. 4 is a structural diagram showing an instance of a DHCP option carrying a domain name of a video transmission management server DNS in an embodiment of the present invention;
FIG. 5 is a structural diagram showing how a DHCP option carries an IP address of a video transmission management server in an embodiment of the present invention;
FIG. 6 is a structural diagram showing an instance of a DHCP option carrying an IP address of a video transmission management server in an embodiment of the present invention;
FIG. 7 is a schematic structural diagram showing a system for obtaining an address of a video transmission management server in an embodiment of the present invention;
FIG. 8 is a schematic structural diagram showing an apparatus for obtaining an address of a video transmission management server in an embodiment of the present invention;
FIG. 9 is a flowchart of a method for obtaining an address of a video transmission management server in an embodiment of the present invention; and
FIG. 10 is a schematic structural diagram showing an apparatus for obtaining an address of a video transmission management server in an embodiment of the present invention.

### DETAILED DESCRIPTION OF THE EMBODIMENTS

In order to make the objectives, features and advantages of the technical solution under the present invention clearer, the following describes the embodiments of the present invention in more detail with reference to the accompanying drawings.

Evidently, the embodiments described herein are only some embodiments of the present invention but not all embodiments of the present invention. All other embodiments, which can be derived by those skilled in the art from the embodiments provided herein without creative efforts, shall fall within the protection scope of the present invention.

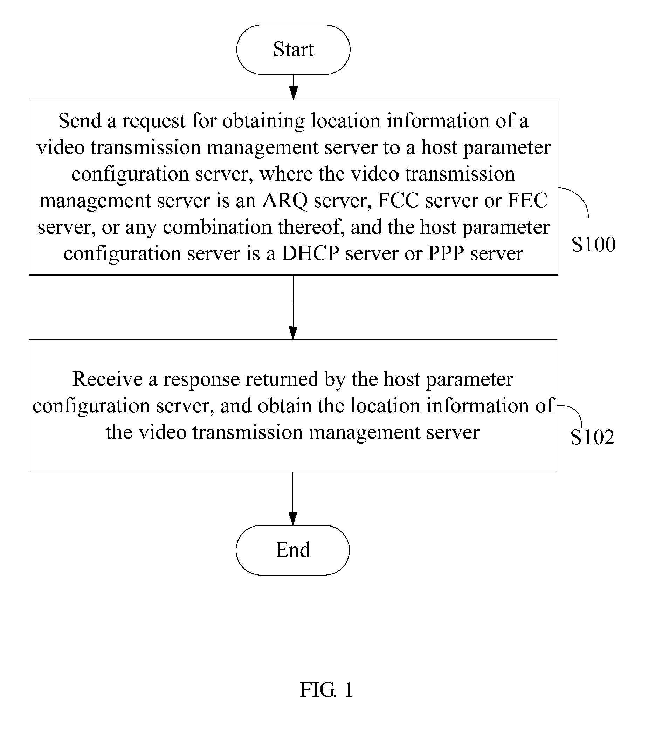

FIG. 1 is a flowchart of a method for obtaining an address of a video transmission management server in an embodiment of the present invention. As shown in FIG. 1, the method includes the following steps:
Step S100: Send a request for obtaining location information of the video transmission management server to a host parameter configuration server, where the video transmission management server is an ARQ server, an FCC server or an FEC server, or any combination thereof, and the host parameter configuration server is a DHCP server or a PPP server.

The location information of the video transmission management server includes: the domain name of the video transmission management server, or the IP address of the video transmission management server.

The step of sending the request for obtaining location information of the video transmission management server to the host parameter configuration server includes:
the request for obtaining the location information of the video transmission management server is carried in an extended DHCP request or PPP Internet Protocol Control Protocol (IPCP) request, and sending the extended DHCP request or PPP IPCP request to the host parameter configuration server (a DHCP server for a DHCP protocol or a PPP server for a PPP protocol).

Step S102: Receive a response returned by the host parameter configuration server, and obtain the location information of the video transmission management server.

The location information of the video transmission management server is selected by the host parameter configuration server for the user terminal according to the access location of the user terminal and/or the load of video transmission management servers.

The method further includes:
testing whether the video transmission management server works normally according to the location information of the video transmission management server.

In the proceeding technical solution according to the embodiment of the present invention, a request for obtaining the location information of the video transmission management server is sent to the host parameter configuration server; a response is received from the host parameter configuration server, and the location information of the video transmission management server is obtained. In this way, the following problems in the prior art are solved: a configuration server needs to be introduced additionally, the interaction procedure is complex, the configuration workload is heavy and the operation expenditure is high, the risk of potential node faults is high. Therefore, the interaction procedure is simplified and the user experience is improved.

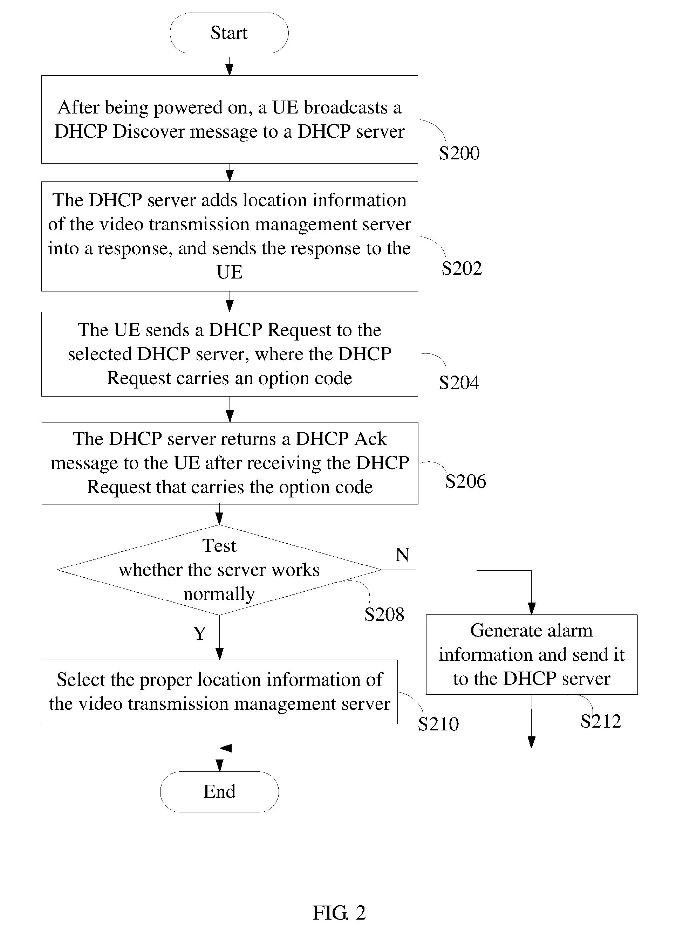

FIG. 2 is a flowchart showing detailed implementation of a method for obtaining an address of a video transmission management server in an embodiment of the present invention. This method is applicable to all kinds of user terminals such as an STB.

The host parameter configuration server in the following includes: a DHCP server or a PPP server. In the following embodiments, the host parameter configuration server being a DHCP server is taken as an example for description, but the procedure is also applicable to the case that the host parameter configuration server is a PPP server.

Step S200: After being powered on, the user terminal broadcasts a DHCP Discover message to the DHCP server. The message requests for specified host parameters, for example, IP addresses of the DNS server, the TFTP server, the host, or the gateway, and requests for the location information of the video transmission management server. A parameter request list option in the message carries the specified option code (such as 216) to request the location information of the video transmission management server.

The video transmission management server is an ARQ server, an FCC server or an FEC server, or any combination thereof; and the host parameter configuration server is a DHCP server or a PPP server.

The way that the location information of the video transmission management server is obtained through a DHCP Discover message carrying the location information of the video transmission management server is a way for obtaining the location information of the video transmission management server. Other similar way may be: A PPP IPCP protocol request is extended to carry the request for the location information of the video transmission management server and sent to the PPP server.

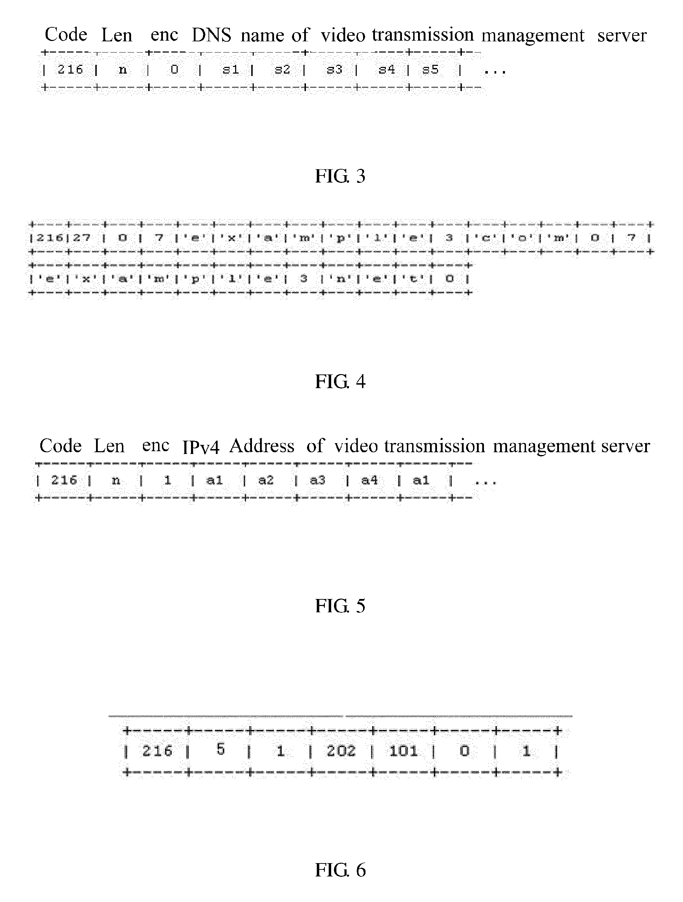

Taking the DHCP as an example, a new option (for example, with the code "216") is extended in the DHCP protocol message to carry the location information of the video transmission management server. The location information may be expressed as a domain name, as shown in FIG. 3.

FIG. 3 is a structural diagram showing how a DHCP option carries a domain name of a video transmission management server in an embodiment of the present invention.

The fields in FIG. 3 are described below:
Code field: represents the value of an option extended in a DHCP message, for example, 216;
Len field: represents the length (n) of the field; and
enc field: differentiates between description ways of the location information of the video transmission management server;
If the value of enc is 0, the address of the video transmission management server is described as a domain name; if the value of enc is 1, the address of the video transmission management server is described as an IP address;
DNS name of video transmission management server: indicates the domain name
of the video transmission management server.

An instance of a DHCP option carrying a domain name of the video transmission management server is shown in FIG. 4.

FIG. 4 is a structural diagram showing an instance of a DHCP option carrying a domain name of a video transmission management server in an embodiment of the present invention. In FIG. 4, an option is extended in the DHCP message to carry a domain name, where the code is 216, the length is 27 bytes, and the value of enc is 0; example.com and example.net are the location information of the video transmission management server.

FIG. 5 is a structural diagram showing how a DHCP option carries an IP address of a video transmission management server in an embodiment of the present invention.

The fields are described below:
Code: represents the value of an option added in a DHCP message, for example, 216;
Len: represents the length (n) of the field; and
enc: differentiates between description ways of the location information of the video transmission management server;
If the value of enc is 0, the address of the video transmission management server is described as a domain name; if the value of enc is 1, the address of the video transmission management server is described as an IP address; and IPV4 Address of video transmission management server: indicates the IPv4 address of the video transmission management server.

An instance of a DHCP option carrying an IP address of the video transmission management server is shown in FIG. 6.

FIG. 6 is a structural diagram showing an instance of a DHCP option carrying an IP address of a video transmission management server in an embodiment of the present invention. In FIG. 6, an option is extended in the DHCP message to carry the IP address, where the code is 216, the length is 5 bytes, and the value of enc is 1; 202.101.0.1 is the location information of the video transmission management server.

Step S202: After receiving the DHCP Discover request that carries an option code (such as 216), the DHCP server adds the location information of the video transmission management server to a DHCP Offer message, and sends the DHCP Offer message to the user terminal as a response.

The host parameter configuration server selects the location information of the video transmission management server for the user terminal according to the access location of the user terminal and/or the load of the video transmission management server.

The response returned by the DHCP server may carry the location information of one or more video transmission management servers. The DHCP server may also select the video transmission management server for the STB according to the access location of the STB. That is, the DHCP server selects the boards in the network device corresponding to the STB as video transmission management servers which provide video transmission enhancement services for the STB. The boards may be a Video Distribution Function (VDF) board, an inline Value-added Service Engine (iVSE) board, an Advanced Video Service Module (AVSM) board, or other boards that implement functions of the video transmission management server. Alternatively, according to the access location of the user terminal and the load of each video transmission management server, the DHCP server selects the boards in the network device corresponding to the STB as the video transmission management servers which provide video transmission enhancement services for the STB. In this way, the load is balanced between different boards of the same network device. For example, the corresponding video transmission management servers are deployed according to the access position of the user and the dynamic address, and therefore, the user can be bound to the corresponding network device, and the load is balanced between different boards according to the access location of the user. For example, two STB user groups are configured on the DHCP server to respectively correspond to two boards. The following is an example of configuring the Command Line Interface (CLI):
ip dhcp server-1
ip pool 10.1.1.0 255.255.255.0 vdf 172.1.1.1 match vlan-id 100 - 600
ip pool 10.1.2.0 255.255.255.0 vdf 172.1.1.2 match vlan-id 700 - 1200

In the CLI above, an address pool denotes the IP address segment to be allocated to the STB, for example, 10.1.1.0 segment (with the mask 255.255.255.0); the "match" part denotes the STB ID corresponding to this address pool, and the STB ID is a Vlan-ID in this example; and "VDF" denotes the address of the VDF board corresponding to this address pool.

Step S204: The user terminal sends a DHCP Request to the selected DHCP server. The DHCP Request carries the option code "216".

Step S206: The DHCP server returns a DHCP Ack message to the user terminal after receiving the DHCP Request that carries the option code "216". The DHCP Ack message carries the location information of the video transmission management server (such as domain name or IP address of the video transmission management server), namely, the corresponding option content.

Step S208: The user terminal tests whether the video transmission management server works normally after obtaining the address information of the video transmission management server.

Step S210: The user terminal selects the proper location information of the video transmission management server if the server works normally.

Step S212: The user terminal generates alarm information and sends it to the DHCP server if the server does not work normally.

A person skilled in the art understand that the DHCP Discover message in step S200 and the DHCP Request message in step S204 carry only the specified option ID; and the content of the option, namely, the option field illustrated in FIG. 3 to FIG. 6 is carried in the DHCP Offer message in step S202 and the Ack message in step S206.

In the proceeding technical solution according to the embodiments of the invention, a request for obtaining the location information of the video transmission management server is sent to the host parameter configuration server; a response is received from the DHCP server, and the location information of the video transmission management server is obtained. In this way, the following problems in the prior art are solved: a configuration server needs to be introduced additionally, the interaction procedure is complex, the configuration workload is heavy and the operation expenditure is high, the risk of potential node faults is high. Therefore, no configuration server needs to be introduced additionally, the interaction procedure is simplified, the risk of faults caused by additionally introduced nodes is reduced; and it is easy to deploy the video transmission management servers according to the access location of the user and the dynamic address, bind the user to the network device, and balance the load between boards according to the access location of the user.

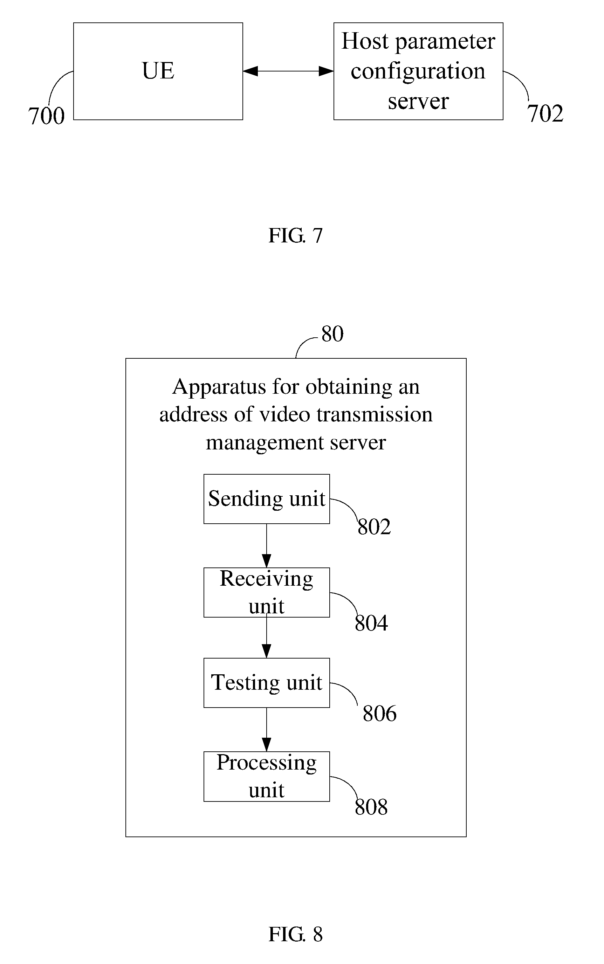

FIG. 7 is a schematic structural diagram of a system for obtaining an address of a video transmission management server in an embodiment of the present invention.

As shown in FIG. 7, a system for obtaining an address of a video transmission management server includes:
a user terminal 700, configured to send a request for obtaining location information of the video transmission management server to a host parameter configuration server; and receive a response returned by the host parameter configuration server, and obtain the location information of the video transmission management server, where the video transmission management server is an ARQ server, an FCC server or an FEC server, or any combination thereof; and
a host parameter configuration server 702, configured to receive the request sent by the user terminal for obtaining the location information of the video transmission management server; obtain the location information of the video transmission management server according to the request, and return the response to the user terminal, where the host parameter configuration server is a DHCP server or a PPP server.

The host parameter configuration server 702 is further configured to receive a confirmation message sent by the user terminal and return a corresponding confirmation message to the user terminal.

The user terminal 700 is further configured to test whether the video transmission management server works normally according to the location information of the video transmission management server. If the video transmission management server works normally, the user terminal selects the proper location information of the video transmission management server; otherwise, the user terminal generates alarm information and sends it to the host parameter configuration server.

The location information of the video transmission management server includes: the domain name of the video transmission management server, or the IP address of the video transmission management server.

The location information of the video transmission management server is selected by the host parameter configuration server for the user terminal according to the access location of the user terminal and/or the load of the video transmission management server.

The request for obtaining the location information of the video transmission management server is carried in an extended DHCP request or a PPP IPCP request.

Specifically, taking the DHCP as an example, a new option (for example, with the code "216") is extended in the DHCP message to carry the location information of the video transmission management server. For the detailed structural diagram, refer to FIG. 3 to FIG. 6; for the detailed description information, refer to the description in the second embodiment above.

It can be seen from the system for obtaining the address of a video transmission management server described above that, the following problems in the prior art are solved: a configuration server needs to be introduced additionally, the interaction procedure is complex, the configuration workload is heavy and the operation expenditure is high, the risk of potential node faults is high. Therefore, no configuration server needs to be introduced additionally, the interaction procedure is simplified, the risk of faults caused by additionally introduced nodes is reduced; and it is easy to deploy the video transmission management servers according to the access location of the user and the dynamic address, bind the user to the network device, and balance the load between boards according to the access location of the user.

FIG. 8 is a schematic diagram of an apparatus for obtaining an address of a video transmission management server in an embodiment of the present invention.

As shown in FIG. 8, an apparatus 80 for obtaining an address of a video transmission management server includes:
a sending unit 802, configured to send a request for obtaining location information of the video transmission management server to a host parameter configuration server, where the video transmission management server is an ARQ server, an FCC server or an FEC server, or any combination thereof, and the host parameter configuration server is a DHCP server or a PPP server; and
a receiving unit 804, configured to receive a response returned by the host parameter configuration server, and obtain the location information of the video transmission management server, where the response carries the location information required by the user terminal.

The request for obtaining the location information of the video transmission management server is carried in an extended DHCP request or a PPP IPCP request.

After the user terminal receives the location information of the video transmission management server, the apparatus further includes:
a testing unit 806, configured to test whether the video transmission management server works normally according to the location information of the video transmission management server; and
a processing unit 808, configured to act according to the test result of the testing unit.

If the video transmission management server works normally, the processing unit 808 selects the proper location information of the video transmission management server; otherwise, the processing unit 808 generates alarm information and sends it to the DHCP server.

The location information of the video transmission management server includes: the domain name of the video transmission management server, or the IP address of the video transmission management server.

It can be seen from the apparatus for obtaining the address of the video transmission management server described above that, the following problems in the prior art are solved: a configuration server needs to be introduced additionally, the interaction procedure is complex, the configuration workload is heavy and the operation expenditure is high, the risk of potential node faults is high. Therefore, the interaction procedure is simplified and the user experience is improved.

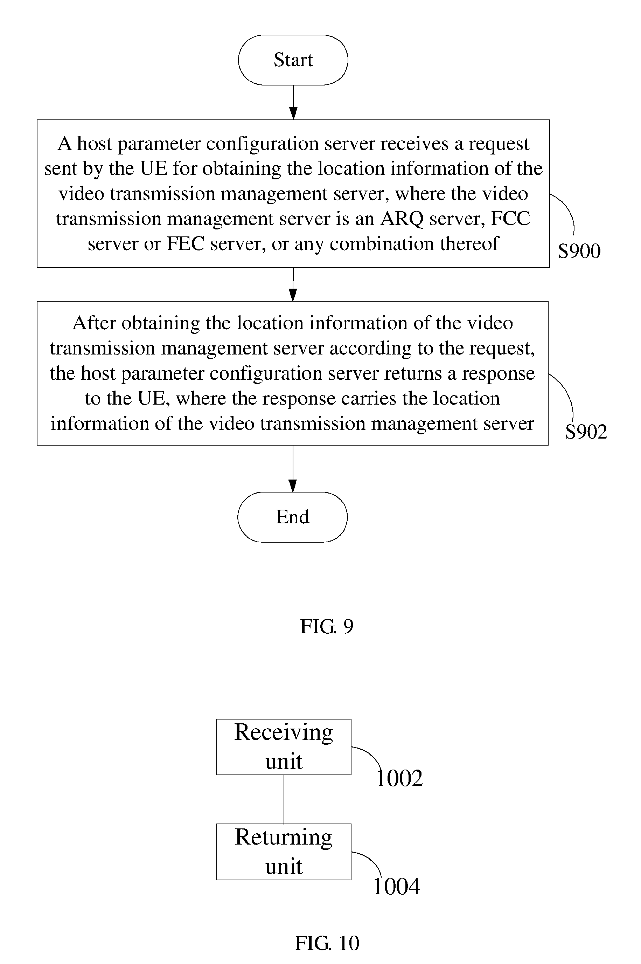

FIG. 9 is a flowchart of a method for obtaining an address of a video transmission management server in an embodiment of the present invention. As shown in FIG. 9, the method includes the following steps:
Step S900: The host parameter configuration server receives a request sent by the user terminal for obtaining the location information of the video transmission management server, which may be an ARQ server, an FCC server or an FEC server, or any combination thereof. The host parameter configuration server is a DHCP server or a PPP server.

The location information of the video transmission management server includes: the domain name of the video transmission management server, or the IP address of the video transmission management server.

The request for the location information is carried in an extended DHCP request or a PPP IPCP request which is destined for the host parameter configuration server (DHCP server or PPP server).

Step S902: After obtaining the location information of the video transmission management server according to the request, the host parameter configuration server returns a response to the user terminal. The response carries the location information of the video transmission management server.

Before performing step S902, the host parameter configuration server may select the location information of the video transmission management server for the user terminal according to the access location of the user terminal and/or the load of the video transmission management server.

It can be seen from the embodiment of the present invention provided by the proceeding technical solution that, a request for obtaining the location information of the video transmission management server is received from the user terminal; the location information of the video transmission management server is obtained according to the request, and a response that carries the location information of the video transmission management server is returned to the user terminal. In this way, the following problems in the prior art are solved: a configuration server needs to be introduced additionally, the interaction procedure is complex, the configuration workload is heavy and the operation expenditure is high, the risk of potential node faults is high. Therefore, the interaction procedure is simplified and the user experience is improved.

FIG. 10 is a schematic structural diagram of an apparatus for obtaining an address of a video transmission management server in an embodiment of the present invention. As shown in FIG. 10, the apparatus includes:
a receiving unit 1002, configured to receive a request sent by the user terminal for obtaining the location information of the video transmission management server, where the video transmission management server is an ARQ server, an FCC server or an FEC server, or any combination thereof; and
a returning unit 1004, configured to return a response to the user terminal after obtaining the location information of the video transmission management server according to the request, where the response carries the location information of the video transmission management server.

The location information of the video transmission management server includes: the domain name of the video transmission management server, or the IP address of the video transmission management server.

The apparatus may further include:
a selecting unit, configured to select the location information of the video transmission management server for the user terminal according to the access location of the user terminal and/or the load of the video transmission management server.

The apparatus for obtaining the address of the video transmission management server described above solves the following problems in the prior art: configuration server needs to be introduced additionally, the interaction procedure is complex, the configuration workload is heavy and the operation expenditure is high, the risk of potential node faults is high. Therefore, the interaction procedure is simplified and the user experience is improved.

The proceeding descriptions are merely exemplary embodiments of the present invention, but are not intended to limit the protection scope of the present invention. Any modifications, variations or replacement that can be easily derived by those skilled in the art shall fall within the protection scope of the present invention. Therefore, the protection scope of the present invention is subject to the appended claims.

## Claims

1. A method for obtaining an address of a video transmission management server, comprising:
sending a request for obtaining location information of the video transmission management server to a host parameter configuration server, wherein the video transmission management server is an Automatic Repeat Request server (ARQ server), a Fast Channel Change server (FCC server) or a Forward Error Correction server (FEC server), or any combination thereof, and the host parameter configuration server is a Dynamic Host Configuration Protocol server (DHCP server) or a Point-to-Point Protocol server (PPP server); and
receiving a response returned by the host parameter configuration server, and obtaining the location information of the video transmission management server.

2. The method according to claim 1, wherein the location information of the video transmission management server comprises:
a domain name of the video transmission management server, or an Internet Protocol (IP) address of the video transmission management server.

3. The method according to claim 1, wherein:
the sending of the request for obtaining location information of the video transmission management server to the host parameter configuration server comprises:
adding the request for obtaining the location information of the video transmission management server to an extended DHCP request or a PPP Internet Protocol Control Protocol (IPCP) request, and sending the request to the host parameter configuration server.

4. The method according to any one of claims 1-3, wherein:
the location information of the video transmission management server is selected by the host parameter configuration server for a user terminal according to access location of the user terminal and/or load of the video transmission management server.

5. A method for obtaining an address of a video transmission management server, comprising:
receiving a request sent by a user terminal for obtaining location information of a video transmission management server, wherein the video transmission management server is an Automatic Repeat Request server (ARQ server), a Fast Channel Change server (FCC server) or a Forward Error Correction server (FEC server), or any combination thereof; and
returning a response to the user terminal after obtaining the location information of the video transmission management server according to the request, wherein the response carries the location information of the video transmission management server.

6. The method according to claim 5, wherein the location information of the video transmission management server comprises:
a domain name of the video transmission management server, or an Internet Protocol (IP) address of the video transmission management server.

7. The method according to claim 5 or claim 6, wherein:
before the returning the response to the user terminal, the method further comprises:
selecting the location information of the video transmission management server for the user terminal according to access location of the user terminal and/or load of the video transmission management server.

8. An apparatus for obtaining an address of a video transmission management server, comprising:
a receiving unit, configured to receive a request sent by a user terminal for obtaining location information of the video transmission management server, wherein the video transmission management server is an Automatic Repeat Request server (ARQ server), a Fast Channel Change server (FCC server) or a Forward Error Correction server (FEC server), or any combination thereof; and
a returning unit, configured to return a response to the user terminal after obtaining the location information of the video transmission management server according to the request, wherein the response carries the location information of the video transmission management server.

9. The apparatus according to claim 8, wherein the location information of the video transmission management server comprises:
a domain name of the video transmission management server, or an Internet Protocol (IP) address of the video transmission management server.

10. The apparatus according to claim 8, further comprising:
a selecting unit, configured to select the location information of the video transmission management server for the user terminal according to access location of the user terminal and/or load of the video transmission management server.

11. An apparatus for obtaining an address of a video transmission management server, comprising:
a sending unit, configured to send a request for obtaining the location information of a video transmission management server to a host parameter configuration server, wherein the video transmission management server is an Automatic Repeat Request server (ARQ server), a Fast Channel Change server (FCC server) or a Forward Error Correction server (FEC server), or any combination thereof, and the host parameter configuration server is a Dynamic Host Configuration Protocol server (DHCP server) or a Point-to-Point Protocol server (PPP server); and
a receiving unit, configured to receive a response returned by the host parameter configuration server, and obtain the location information of the video transmission management server.

12. The apparatus according to claim 11, wherein:
the request for obtaining the location information of the video transmission management server is carried in an extended DHCP request or a PPP Internet Protocol Control Protocol (IPCP) request, and sent to the host parameter configuration server.

13. The apparatus according to claim 11, wherein the location information of the video transmission management server comprises:
a domain name of the video transmission management server, or an Internet Protocol (IP) address of the video transmission management server.

14. The apparatus according to claim 11, wherein:
the location information of the video transmission management server is selected by the host parameter configuration server for a user terminal according to access location of the user terminal and/or load of the video transmission management server.
